Europäisches Patentamt

European Patent Office

Office européen des brevets

(19)

(11) Publication number: **0 419 671 A1**

(12) **EUROPEAN PATENT APPLICATION**
published in accordance with Art.
158(3) EPC

(21) Application number: 90903932.3

(22) Date of filing: 02.03.90

(86) International application number:
PCT/JP90/00280

(87) International publication number:
WO 90/10519 (20.09.90 90/22)

(51) Int. Cl.5: **B23K 26/00**, H01S 3/104

(30) Priority: 09.03.89 JP 56893/89

(43) Date of publication of application:
03.04.91 Bulletin 91/14

(84) Designated Contracting States:
DE FR GB

(71) Applicant: FANUC LTD.
3580, Shibokusa Aza-Komanba, Oshino-mura
Minamitsuru-gun, Yamanashi 401-05(JP)

(72) Inventor: ARAI, T
F.M.H 3-309 1205, Shibokusa Oshinomura
Minamitsuru-gun Yamanashi 401-05(JP)

(74) Representative: Brunner, Michael John et al
GILL JENNINGS & EVERY 53-64 Chancery
Lane
London WC2A 1HN(GB)

(54) LASER OUTPUT CONTROL SYSTEM.

(57) A laser output control system for an NC laser in which a numerical control apparatus (CNC) and a gas laser oscillator are coupled together. There are provided a lint output control mode and a second output control mode. In the first output control mode, a shutter is closed (S2) prior to starting the machining, and the laser is pre-oscillated to raise the temperature of a laser gas in order to maintain constant the temperature of the inner wall of the discharge tube (S3 to S6). When a machining instruction is input, the base discharge condition is once established (S8), the shutter is opened (S9), and the output instruction value is increased to produce laser beams. This makes it possible to realize the output control by taking advantages of a conventional shutter control system and a beam control system. In the second output control mode, the base discharge condition is established (S11) and the shutter is opened (S12) to effect the machining. The second output control mode is featured by energy saving, reduced heat generation and long life. This first and second output control modes can be selected by an operator depending upon the type of machining.

FIG. 1(a)

FIG. 1(b)

# LASER OUTPUT CONTROL METHOD

Technical Field

This invention relates to a laser output control method for an NC laser device which is a combination of a numerical control device (CNC) and a gas laser oscillator, and more particularly, to a laser output control method by which energy is saved and a high machining accuracy attained.

Background Art

Laser output control methods are generally classified into a shutter control method and a beam control method, and conventional laser devices employ one of the two, depending on the purpose.

In the shutter control method, a shutter arranged midway in an output route of a laser beam leading to the outside is opened and closed in accordance with a machining command. Since a laser oscillation is effected before the start and during an intermission of a machining operation, to provide a constant output, the inner wall temperature of a discharge tube is maintained in a steady state, and accordingly, the output mode of a laser beam remains stable from the start of the machining. This method is used, in particular, for machining thin articles requiring à strict machining accuracy.

In contrast, in the beam control method, the laser oscillator is maintained in a base discharging state when a machining operation is not carried out, and a laser beam is output with the output command value increased by inputting a machining command. Accordingly, this method requires less energy, compared to the shutter control method, and generates less heat, and the service life of the optical components, etc., is prolonged.

The above two methods, however, have a problem in that one method cannot attain the advantageous effects of the other.

Namely, the shutter control method has a poor operating efficiency and the service life of the optical components is short. Further, since the opening/closing speed of the shutter is slow, the controllability is poor.

In the beam control method, on the other hand, the inner wall temperature of the discharge tube is low at the start of machining, and accordingly, the output mode is liable to be low, which lowers the machining accuracy.

Disclosure of the Invention

This invention was created in view of the above circumstances, and an object thereof is to provide a laser output control method by which energy is saved and a high machining accuracy attained.

To achieve the above object, according to the present invention, there is provided a laser output control method for an NC laser device which is a combination of a numerical control device (CNC) and a gas laser oscillator, characterized in that a first output control mode and a second output control mode are provided.

In the first output control mode, before a machining operation is started, a laser output route leading to the outside is blocked, a preliminary laser oscillation is effected, a laser gas temperature is detected by a temperature sensor and compared with a preset temperature, and a temperature control of the laser gas temperature is carried out by controlling a laser output in such a manner that the laser gas temperature is raised to the preset temperature and an inner wall temperature of a discharge tube is maintained in a steady state, and after a machining command is input, a base discharging state is attained, the laser output route is opened, and a laser oscillation is effected to provide a predetermined laser output commanded by the machining command.

In the second output control mode, the blocking of the laser output route, the preliminary laser oscillation, and the temperature control are not carried out, and after a machining command is input, a base discharging state is attained, the laser output route is opened, and a laser oscillation is effected to provide a predetermined laser output commanded by the machining command. The switching between the first output control mode and the second output control mode is effected in accordance with a command.

In the first output control mode, before a machining operation is started, a preliminary laser oscillation is effected with the shutter closed, whereby the laser gas temperature is increased and the inner wall temperature of the discharge tube can be maintained in a steady state. When a machining command is input, first the base discharging state is attained, and then the shutter is opened and a laser beam is output with the output command value increased. Accordingly, it is possible to effect an output control achieving the advantages of both the conventionally known shutter control method and beam control method.

The second output control mode corresponds to the conventional beam control method, and accordingly, is energy-saving, produces less heat, and can ensure a prolonged service life.

An operator can select either of the first and second output control modes as desired.

Brief Description of the Drawings

Figs. 1(a) and 1(b) are flowcharts illustrating a laser output control method according to one embodiment of this invention;

Fig. 2 is a block diagram showing an arrangement of hardware of an NC laser device for carrying out the invention;

Fig. 3 is a timing chart showing an example of providing various commands when an A mode is selected, according to the embodiment of the invention; and

Fig. 4 is a timing chart showing an example of providing various commands when a B mode is selected, according to the embodiment of the invention.

Best Mode of Carrying Out the Invention

An embodiment of this invention will be described with reference to the drawings.

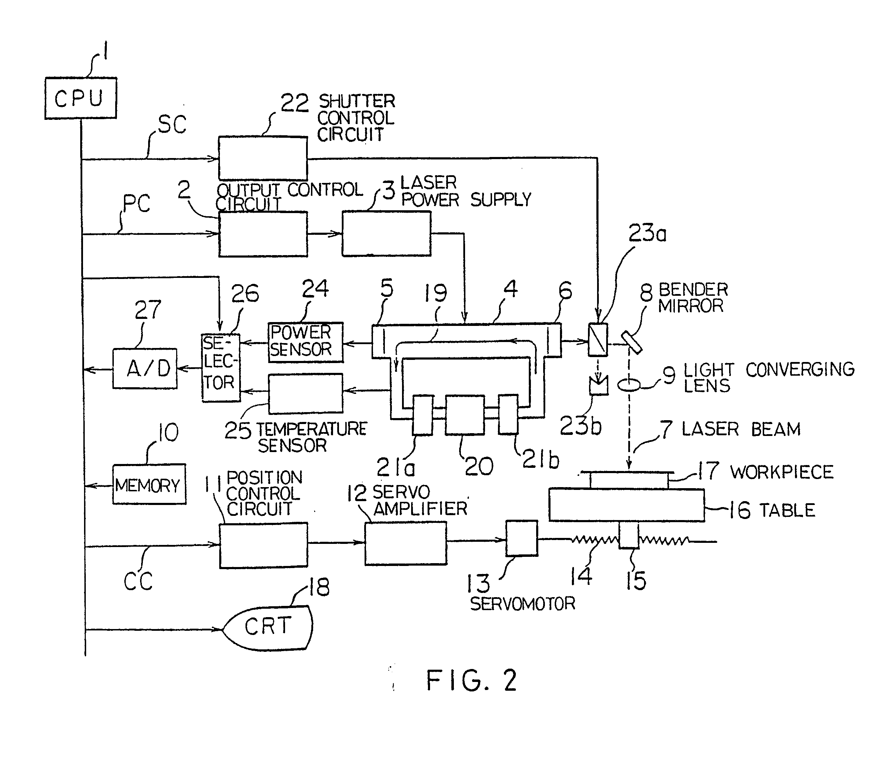

Figure 2 is a block diagram showing an arrangement of hardware of an NC laser device for carrying out a laser output control method of the invention, wherein a processor 1 controls the operation of the entire NC laser device in accordance with machining commands in a machining program, not shown. An output control circuit 2 has a D/A converter therein and converts an output command PC supplied from the processor 1 into a current command value before outputting same. A power supply 3 for the laser device rectifies commercial power, generates a high-frequency voltage by a switching operation thereof, and then supplies a high-frequency current corresponding to the current command value to a discharge tube 4.

A laser gas 19 is circulated within the discharge tube 4, and is excited by an electric discharge when a high-frequency current is supplied from the laser power supply 3. A rear mirror 5 is made of germanium (Ge) and has a reflectivity of 99.5%, and an output mirror 6 is made of zinc selenide (ZnSe) and has a reflectivity of 40% to 55%. These mirrors constitute a Fabry-Pérot resonator, whereby a 10.6 $\mu$m light emitted from the molecules of an excited laser gas is amplified and a part thereof output to the outside from the output mirror 6 as a laser beam 7.

When a shutter 23a, described later, is open, the output laser beam 7 is deflected by a bender mirror 8, converged by a light converging lens 9 to a size of 0.2 mm or less, and is radiated onto a surface of a workpiece 17.

A memory 10 stores the machining program and various parameters, etc., and comprises a battery-backup CMOS or the like. A position control circuit 11 decodes a feed command CC supplied from the processor 1, and controls the rotation of a servomotor 13 through a servo amplifier 12, and further controls the movement of a table 16 by a ball screw 14 and a nut 15, to thereby control the positioning of the workpiece 17. In the figure, only one axis is illustrated and the other axes are omitted. A display device 18 comprises a CRT, a liquid crystal display device, or the like, and displays a parameter setting menu or laser condition setting menu on a display screen thereof, so that an operator can select one of two output control modes, described later, in an interactive manner by operating keys, not shown.

A blower 20 comprises a Roots blower or the like and circulates the laser gas 19 through cooling units 21a and 21b. The cooling unit 21a serves to cool the laser gas 19 heated to a high temperature due to the laser oscillation, and the cooling unit 21b serves to remove the heat of the compression produced by the blower 20.

A shutter control circuit 22 opens and closes the shutter 23a in accordance with a shutter open/close command SC supplied from the processor 1. The shutter 23a comprises a copper plate or aluminum plate having a surface thereof plated with gold, and when closed, reflects the laser beam 7 from the output mirror 6 toward a beam absorber 23b for laser beam absorption. When the shutter 23a is open, the laser beam 7 is radiated onto the workpiece 17.

A power sensor 24 comprises a thermocouple, a photoelectric conversion element, or the like, and receives the laser beam output through a portion of the rear mirror 5, to thereby measure the output power of the laser beam 7. A temperature sensor 25 comprises a radiation thermometer and measures the temperature of the laser gas 19, to thereby estimate the inner wall temperature of the discharge tube 4. A selector 26 selects the output of the power sensor 24 or the output of the temperature sensor 25 in accordance with a command from the processor 1, and an A/D converter 27 converts the output of the selector 26 to a digital value and supplies the converted value to the processor 1.

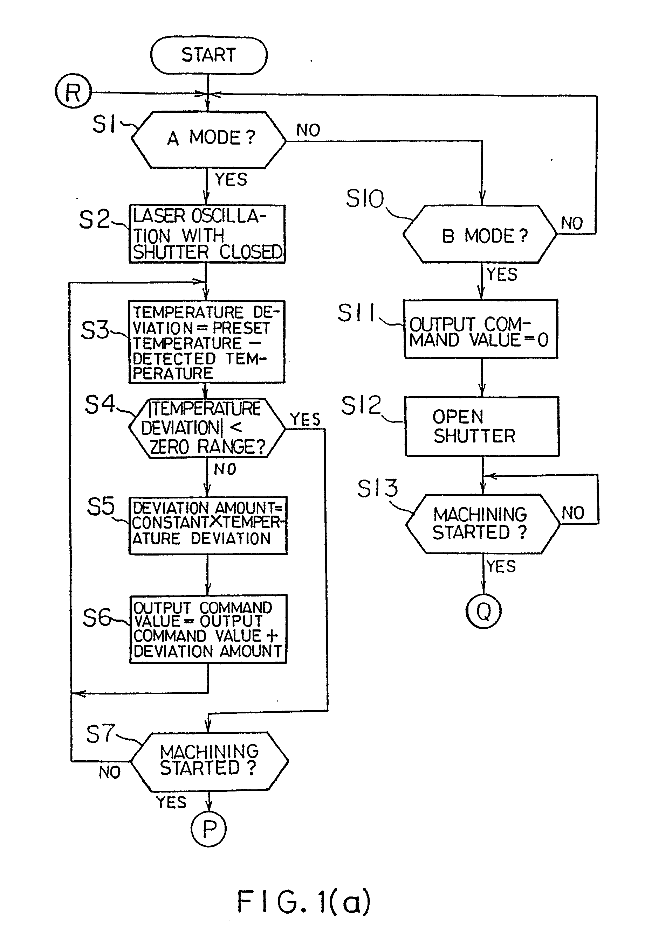

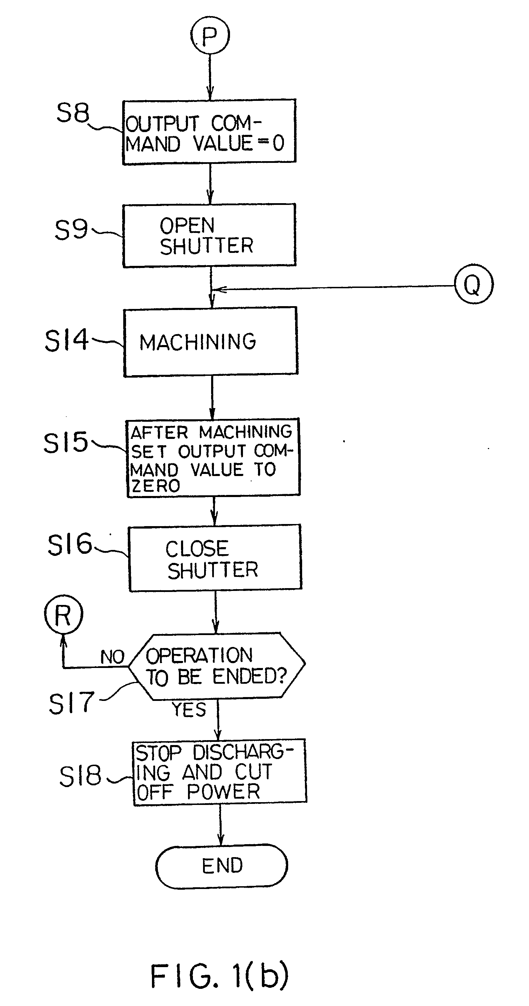

A laser output control method according to the embodiment of this invention will be described with reference to the flowcharts of Figs. 1(a) and 1(b). In the figures, the numbers following the symbol "S" denote step numbers. According to this embodiment, two output control methods, i.e., an A mode and a B mode, are provided.

[S1] It is determined whether or not the A mode is selected. If the A mode is selected, the flow proceeds to S2, and if not, the flow proceeds to S10.

[S2] While the shutter open/close command SC is turned off, an output command PC is issued to effect a preliminary laser oscillation.

[S3] The selector 26 is switched to the temperature sensor side 25 to measure the temperature of the laser gas 19, and a difference between the measured temperature and a previously set temperature is derived to obtain a temperature deviation value.

[S4] It is determined whether or not the absolute value of the temperature deviation falls within a predetermined range, e.g., zero range. If the absolute value is within the predetermined range, the flow proceeds to S7, and if not, the flow proceeds to S5.

[S5] The temperature deviation is multiplied by a specific constant to derive a deviation amount expressed in the laser output value.

[S6] The sum of the deviation amount and a current output command value is output as the output command PC, and the flow returns to S3.

[S7] It is determined whether or not the machining command MC has been output. If the command has been output, the flow proceeds to S8, and if not, the flow returns to S3 and the temperature control is continued.

[S8] The output command value is set to zero to attain a base discharging state, and simultaneously, the selector 26 is switched to the power sensor side 24.

[S9] The shutter open/close command Sc is output to open the shutter 23a.

[S10] It is determined whether or not the B mode is selected. If the B mode is selected, the flow proceeds to S11, and if not, the flow returns to S1.

[S11] The output command value is set to zero to attain a base discharging state, and simultaneously, the selector 26 is switched to the power sensor side 24.

[S12] The shutter open/close command SC is output to open the shutter 23a.

[S13] It is determined whether or not the machining command MC has been output. If the command has been output, the flow proceeds to S14, and if not, the processor stands by.

[S14] The output command PC and the feed command CC are output in accordance with the machining command MC, to carry out a machining operation.

[S15] The machining operation is ended, and the output command value is set to zero to attain a base discharging state.

[S16] The shutter open/close command SC is turned off, whereby the shutter 23a is closed.

[S17] It is determined whether or not the operation is to be ended. If the operation should be ended, the flow proceeds to S18, and if not, the flow returns to S1.

[S18] The output command PC is turned off to stop the electric discharge, and the power is cut off.

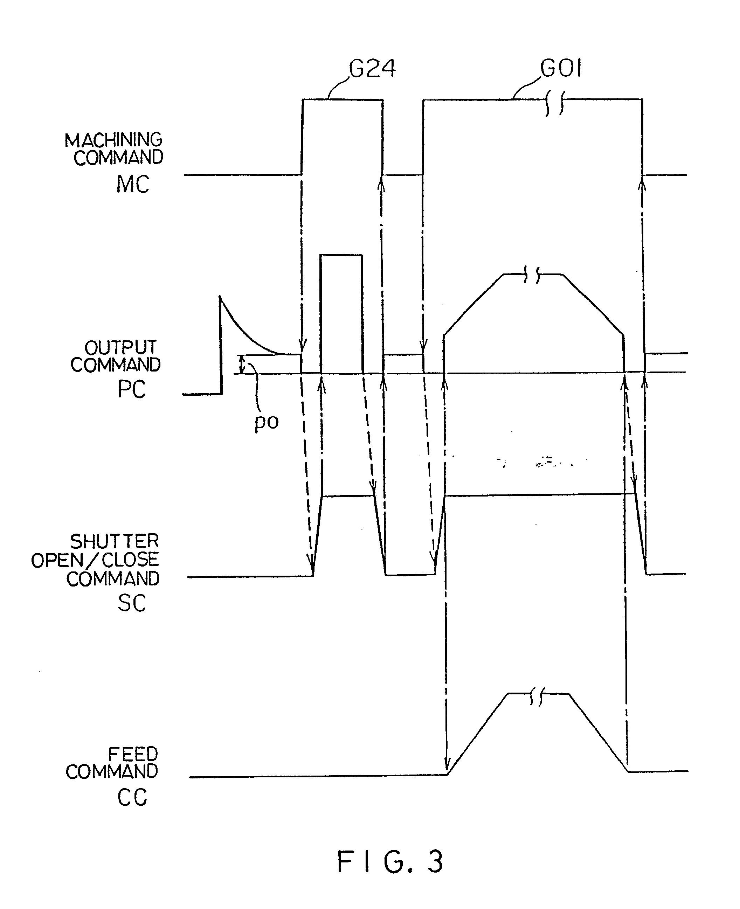

Figure 3 is a timing chart showing an example of providing the various commands when the A mode is selected, according to the embodiment of the invention.

After the start of an operation, an output command PC having a predetermined value is output, but this value is decreased with an increase in the temperature of the laser gas 19, and then held at a constant value p0.

When a G24 (piercing operation) command is output by the machining command MC, the output command PC calls for a base discharging and the shutter open/close command SC is output. Accordingly, the shutter 23a is opened, and an output command PC having a predetermined output command value required by the machining command MC is output, whereby the laser beam 7 is radiated onto the workpiece 17. Upon completion of the piercing operation, the shutter open/close command SC is turned off and the output command PC again calls for the base discharging.

Also when a G01 (cutting operation) command is output by the machining command MC, the output command PC first calls for the base discharging and the shutter open/close command SC is output. When the shutter 23a is opened, an output command PC and a feed command CC having respective predetermined command values required by the machining command MC are output, whereby the workpiece 17 is cut. In this case, the laser output is detected by the power sensor 24 and is fed back so that the laser output coincides with the output command value. After the cutting is completed, the shutter open/close command SC is turned off and the output command PC again calls for the base discharging.

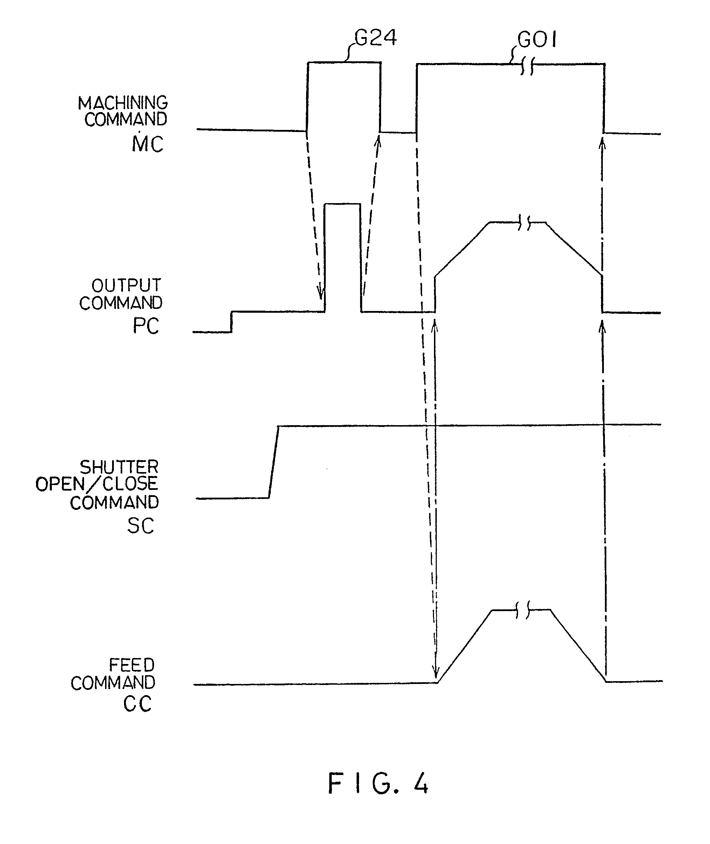

Figure 4 is a timing chart showing an example of providing the various commands when the B mode is selected.

After the start of an operation, the output command PC calls for the base discharging and the shutter open/close command SC is output to open the shutter 23a.

When a G24 (piercing operation) command is output by the machining command MC, an output command PC having a predetermined output command value is output and the laser beam 7 is radiated onto the workpiece 17. Upon completion of the piercing, the base discharging is again effected by the output command PC.

When a G01 (cutting operation) command is output by the machining command MC, an output command PC and a feed command CC having respective predetermined command values are output, whereby the workpiece 17 is cut. After the cutting is finished, the base discharging is again commanded by the output command PC.

As described above, according to this invention, the first output control mode and the second output control mode, which can be selected as needed, are provided. In the first output control mode, a preliminary laser oscillation is effected with the shutter closed, before the machining is started, to raise the laser gas temperature and then maintain the inner wall temperature of the discharge tube in a steady state. When a machining command is input, the base discharging state is first attained, and then the laser beam is output by increasing the output command value, whereby a stable single-mode laser beam can be output from the start of the machining. This mode is superior to the conventional shutter control method from the viewpoint of energy saving, and can achieve a higher machining accuracy than the beam control method.

The second output control mode requires less energy, produces less heat, and ensures a longer service life than the first output control mode, and accordingly, is useful for a machining not requiring a very high machining accuracy.

Moreover, the first and second output control modes can be switched in an interactive manner on the display screen of the NC laser device, whereby the operating efficiency is improved and the method can be easily applied to a wide variety of machining operations.

## Claims

1. A laser output control method for an NC laser device which is a combination of a numerical control device (CNC) and a gas laser oscillator, characterized in that:

   a first output control mode and a second output control mode are provided;

   in the first output control mode, before a machining operation is started, a laser output route leading to outside is blocked, a preliminary laser oscillation is effected, a laser gas temperature is detected by a temperature sensor and compared with a preset temperature, and a temperature control of the laser gas temperature is carried out by controlling a laser output such that the laser gas temperature is raised to the preset temperature and an inner wall temperature of a discharge tube is maintained in a steady state, and after a machining command is input, a base discharging state is attained, the laser output route is opened, and a laser oscillation is effected to provide a predetermined laser output commanded by the machining command;

   in the second output control mode, the blocking of the laser output route, the preliminary laser oscillation, and the temperature control are not carried out, and after a machining command is input, a base discharging state is attained, the laser output route is opened, and a laser oscillation is effected to provide a predetermined laser output commanded by the machining command; and

   a switching between the first output control mode and the second output control mode is effected in accordance with a command.

2. A laser output control method according to claim 1, characterized in that the switching between the output control modes is effected in an interactive manner on a display screen of the NC laser device.

3. A laser output control method according to claim 1, characterized in that, in the first output control mode, after the machining command is executed, the base discharging state is attained, the laser output route is blocked, the preliminary laser oscillation is effected and the temperature control is carried out.

FIG. 1(a)

P

S8 — OUTPUT COM-
MAND VALUE=0

S9 — OPEN
SHUTTER

Q

S14 — MACHINING

S15 — AFTER MACHINING
SET OUTPUT COM-
MAND VALUE TO
ZERO

S16 — CLOSE
SHUTTER

R

NO — OPERATION
TO BE ENDED?

S17

YES

S18 — STOP DISCHARG-
ING AND CUT
OFF POWER

END

F I G. 1( b )

FIG. 2

EP 0 419 671 A1

FIG. 3

FIG. 4

# INTERNATIONAL SEARCH REPORT

International Application No PCT/JP90/00280

**I. CLASSIFICATION OF SUBJECT MATTER** (if several classification symbols apply, indicate all) [6]

According to International Patent Classification (IPC) or to both National Classification and IPC

Int. Cl[5]     B23K26/00, H01S3/104

**II. FIELDS SEARCHED**

Minimum Documentation Searched [7]

| Classification System | Classification Symbols |
|---|---|
| IPC | B23K26/00, H01S3/104 |

Documentation Searched other than Minimum Documentation
to the Extent that such Documents are Included in the Fields Searched [8]

| | |
|---|---|
| Jitsuyo Shinan Koho | 1926 – 1989 |
| Kokai Jitsuyo Shinan Koho | 1971 – 1989 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 63-6888 (Komatsu Ltd.), 12 January 1988 (12. 01. 88), Line 9, column 4 to line 13, column 5, (Family: none) | 1 – 3 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| May 16, 1990 (16. 05. 90) | May 28, 1990 (28. 05. 90) |

| International Searching Authority | Signature of Authorized Officer |
|---|---|
| Japanese Patent Office | |

Form PCT ISA/210 (second sheet) (January 1985)